# EUROPEAN PATENT SPECIFICATION

(11) **EP 1 360 816 B1**
(45) Date of publication and mention of the grant of the patent: **01.04.2009**
(21) Application number: 02711068.3
(22) Date of filing: 11.02.2002
(51) Int. Cl.: H04L 29/06, G06F 17/30

(54) **NETWORK CONDUIT FOR PROVIDING ACCESS TO DATA SERVICES**
NETZVERBINDUNG ZUR BEREITSTELLUNG EINES ZUGANGES ZU EINEM DATENDIENST
CANAL RESEAU PERMETTANT D'ACCEDER A DES SERVICES DE TRANSMISSION DE DONNEES

(30) Priority: 09.02.2001 WO PCT/GB01/00523
(43) Date of publication of application: 12.11.2003
(73) Proprietor: Infuzer.com. LLC, Barrington, IL 60010 (US)
(72) Inventor: RUSTON, Jeremy, Waine, Ashwell, Hertfordshire SG7 5PE (GB); EITEL-PORTER, Ray, John, New York NY 10024 (US); BIRKLE, Christopher, William, London W14 0DS (GB); CONWAY, Richard, Anthony, Chigwell, Essex IG7 5HE (GB)
(74) Representative: Cross, James Peter Archibald
(86) International application number: PCT/GB2002/000602
(87) International publication number: WO 2002/065730

(56) References cited:
- EP-A- 0 924 628
- EP-A- 0 965 927
- WO-A-00/74335
- US-A- 6 167 441

## Description

### Field of the Invention

The present invention relates to a system for providing access to network data services. The present invention has particular but not exclusive applications to a method of facilitating access to web services by web sites.

### Background of the Invention

Web services are a class of computer program that runs on a server computer connected to the Internet. Instead of using protocols such as HTTP and FTP to communicate with a user, web services are invoked by other programs which may be running on clients or other servers connected to the Internet. Web services may use an XML-based protocol such as SOAP, with a transport protocol such as HTTP.

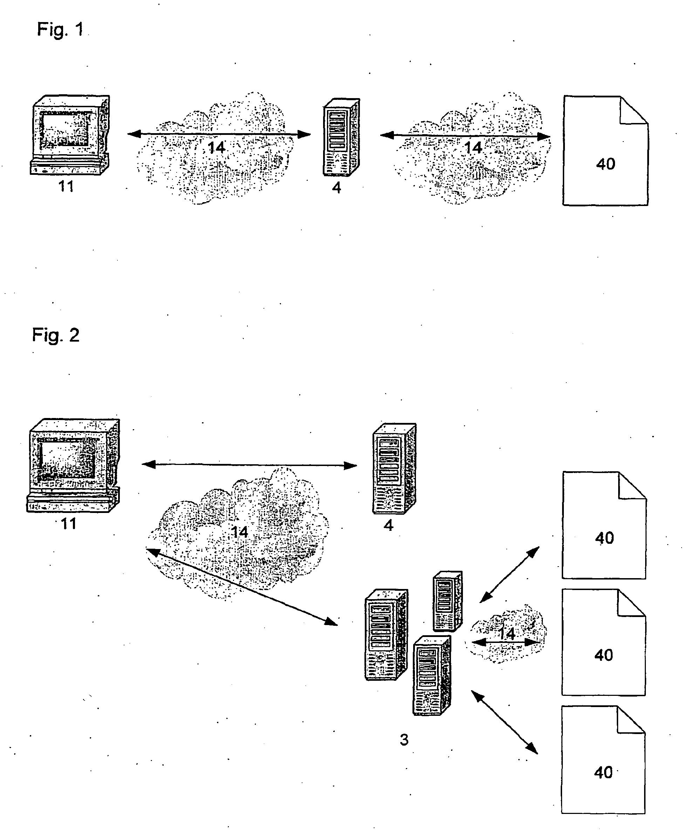

In a conventional architecture shown in Figure 1, a client browser 11 accesses web pages over the Internet 14 on a web site 4, which invokes one or more web services 40 over the Internet 14 as part of the page generation process. Taking for example a web-based timetable lookup service, the user of the client browser 11 downloads a form page from the server 4 and fills in the lookup details of a timetable request. When the form is submitted, the client browser 11 sends a page request including the lookup details to the web site 4 using HTTP. The web site 4 invokes an underlying timetable lookup web service 40 using HTTP to get the data requested by the user, and formats the XML result into a form to be returned in a web page to the browser 11.

This architecture gives great flexibility, and allows the functionality of complex web sites to be distributed as underlying web services across geographic and commercial boundaries. However, there are certain technical requirements for the web site 4 to be able to invoke web services 40: it must be able to make outgoing HTTP requests and to handle XML, SOAP and other protocols. These requirements can be a significant barrier to the use of web services. Furthermore, there is a great deal of freedom of data formats and protocols within web service standards such as HTTP, SOAP and XML, which makes the migration from one web service to another very difficult for a web site operator.

WO 00/74335 relates to a web server for redirecting a client requesting a particular Uniform Resource Locator (URL) to a third party web site. The URL may have been selected by a user from the results produced by a search engine in response to a user query. Thus, the web server of WO 00/74335 can provide a means for redirecting web traffic for a web site that is listed by a search engine to a different web site.

EP 0 924 628 A relates to a system for using a web browser to search large collections of documents. Search parameters are communicated from a web browser to a database client process using common gateway interface (CGI) techniques; the parameters are transformed by the database client process into a format that is supported by a database server process, thereby allowing a database query to be performed in accordance with those parameters. Search results returned by the database server process are transformed by the database client process into Hypertext Markup Language (HTML) with hyperlinks for generating further query commands before being transmitter to the web browser.

### Statement of the Invention

According to the invention there is provided: a method of providing access to a remote data service in accordance with claim 1; a method of providing access to a web service over the Internet in accordance with claim 3; a method of performing a data access operation at a web service over the internet in accordance with claim 7; a web page for providing access to a web service over the Internet in accordance with claim 12; apparatus for providing access to a remote data service over a network in accordance with claim 13; apparatus for providing access to a web service over the Internet in accordance with claim 15; as well as a computer readable storage medium in accordance with claim 11.

In this manner, there is provided a web service conduit which receives data access requests from browsers on pages generated by web sites, converts the data access requests to web service access requests, and invokes the corresponding web services with the web service access requests.

The web service access requests may be requests to read data, or to read and write data. In the case of a read data request, the web service conduit receives data read from the web service, converts it into a browser format and sends it to the browser.

An advantage of the invention is that web site authors can implement web services using a standard format required by the web service conduit, without the technical requirements of the different underlying web services. For example, there will be no need to enable outgoing HTTP at the web site, or to use XML or SOAP.

### Brief Description of the Drawings

Specific embodiments of the present invention will now be described with reference to the accompanying drawings, in which:
Figure 1 is a diagram of a conventional web service architecture;
Figure 2 is a diagram of a web service architecture in a general embodiment of the present invention;
Figure 3 is a diagram of the steps in a read operation in an embodiment of the present invention;
Figure 4 shows a web form as displayed on a browser for initiating the read operation;
Figure 5 shows a log-in form as displayed by the browser during the read operation;
Figure 6 shows a trusted web service check form as displayed by the browser during the read operation;
Figure 7 is a diagram of the steps in a write operation in an embodiment of the present invention; and
Figure 8 shows a web page displaying details of an event and a hyperlink to add the event to a web-based calendar.

### Modes for Carrying Out the Invention

### General Embodiment

A general embodiment of the present invention is shown in Figure 2. In this architecture, web pages on the web site 4 include links to a conduit 3 connected to the Internet 14. The links cause the conduit 3 to invoke one or more underlying web services 40 over the Internet 14 to perform data read and/or write operations. In a read operation, the conduit 3 forwards data read from one of the web services to the browser 11. In a write operation, the data written to one of the web services 40 may be subsequently accessed by a read operation, or via another web server (not shown).

As is well known, the web site 4 may be implemented by one or more web servers each comprising one or more computers connected to the Internet and running a web application on a web server platform.

The web services 40 may be implemented by one or more application servers which comprise one or more computers connected to the Internet and running application server software serving as an interface or 'middleware' to one or more databases. The databases need not be collocated with the application servers but may instead be hosted at remote sites. However, the connections to the databases typically take place over high-bandwidth low-latency networks and not over the Internet. An example of a web service is the Microsoft .NET^{™} web services.

The browser 11 may be implemented by a computer connected directly or indirectly to the Internet 14 and running browser software such as Microsoft^{™} Internet Explorer^{™} or Netscape^{™} Navigator versions 3 or above. The computer may be a desktop, laptop or palmtop computer or any other similar device which is capable of running browser software and connecting to the Internet. The computer may be connected to the Internet indirectly via a wireless circuit-switched or packet-switched network.

The conduit 3 may be implemented by any suitable server configuration, but preferably by a secure, scalable, fault-tolerant server farm running a custom conduit application on suitable platform, such as Linux.

The present invention is not limited to these specific configurations and may be implemented using other types of computer, device and/or network.

### Read Operation

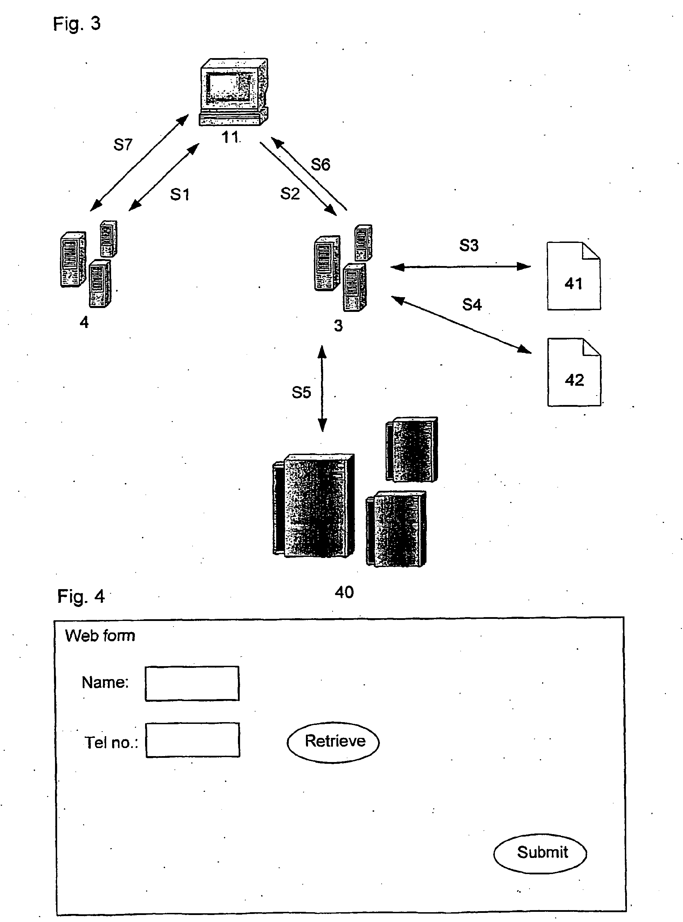

An example of a read operation in a first specific embodiment of the present invention will now be described with reference to Figures 3 to 6. In this example, a form is populated with data retrieved from a user profile web service.

At step S1, the user of the browser 11 requests a page from a web site 4, which returns a form with blank fields. For example, as shown in Figure 4, the page includes fields for the user's name and telephone number. The page includes a 'Retrieve' button which contains a link to the conduit 3 including parameters for passing to the conduit 3. The parameters include the identity of the web service 40, the identity of the web site 4, and the names of fields to be read from the web service 40.

In this example, the user has already stored a full set of details, including name and address, on a web service 40. Rather than enter the details manually, the user clicks on the 'Retrieve' button. At step S2, the browser 11 is redirected to the conduit 3 and the parameters embedded in the link are passed to the conduit 3.

The conduit 3 must authenticate the user and ensure that the user is authorized to access the requested web service. This may be done by verifying that the user is logged in to a user authentication service such as the Microsoft^{™} .NET Passport. Alternatively, the conduit 3 may use a separate authentication system from the web services 40. If the user is already authenticated, then the operation passes directly to step 4 and the user may read the authentication details stored on the user's computer, for example as an encrypted cookie.

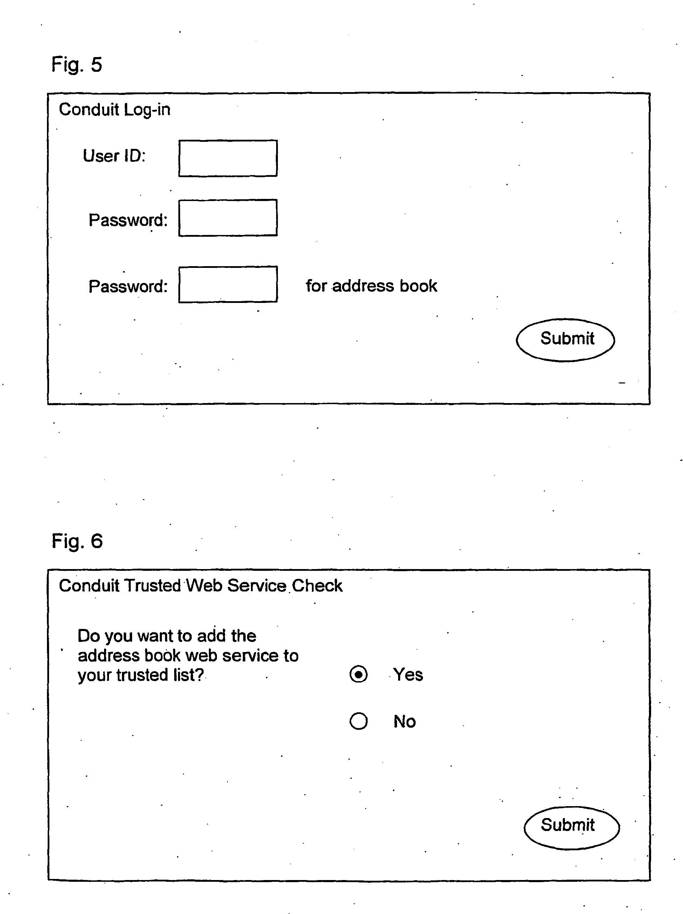

If the user is not logged in, at step S3 the conduit 3 sends a page 41 to the browser 11 requesting the user to log in to the conduit 3 and optionally the relevant web service 40, if this is required. An example of this page is shown in Figure 5. If it is the first visit of the user to the conduit 3 the user may be prompted for a choice of authentication mechanism for the desired category of the read/write web service access. For example, if the user selects .NET Passport to retrieve their profile, then the elected web service will be .NET Profile. This setting may be changed subsequently by the user. Preferably, the conduit 3 generates a separate pop-up window at the browser 11 for communication with the user, so as not to remove the page of the web site 4 from display.

At step S4, the conduit 3 checks the identity of the indicated web service 40 against a list 42 of web services to which the user has granted the conduit 3 permission to access. If the indicated web service is not on this list, the conduit 3 sends a page to the browser 11 prompting the user to add the indicated web service 40 to the user's list 42, as shown for example in Figure 6.. If the user agrees to add the indicated web service to the list 42 then the process continues. Otherwise, the process terminates and the conduit 3 sends a page to the browser 11, preferably in a pop-up window, indicating that the web service 40 cannot be used. At step S5, the conduit 3 sends a read request to the web service 40 using the parameters supplied in the link by the browser 11. The read request is formatted by the conduit 3 according to the protocols required by the web service. The conduit 3 receives the requested data from the web service 40.

At step S6, the conduit 3 formats the received data and forwards it to the browser 11. At step S7, the browser 11 is redirected to the web site 4 with the received data encoded within the query string and the user submits the completed form to the web site 4.

As an alternative to step S6, the conduit 3 may send the received data to the browser 11 as a form POST with the received data encoded in the HTTP request body.

### Web Site Implementation

To implement a read operation link, three HTML fragments must be incorporated in the web site 4: a JavaScript HTML tag, an Onload event in the HTML body tag, and the hyperlink to the conduit 3.

In one example, the JavaScript HTML tag is:
<SCRIPT LANGUAGE="javascript"
SRC=http://conduitserver.com/scripts/conduit_read.js></SCRIPT>

The file requested by this HTML tag contains a single generic function, for example WriteFormValues, to manage the form data requirements and any state data including any application-specific query string or hidden field data present on the web site 4.

The JavaScript function first checks to see if there is a query string argument. If so, and none of the names within the query string name-value pairs correlate to form field names on the web page, then the query string text is appended to the end of the hyperlink to the conduit 3. Similarly, any hidden field data in the page is copied into the hyperlink to the conduit 3.

When returning to the page, the JavaScript function initially associates form fields (either text box or application-defined hidden fields) with name-value pairs within the query string. Any query string information needed for proprietary purposes of the web site 4 is left unimpaired by the conduit 3 so as not to interfere with any web site server script which runs as a prelude to the delivery of the page. A sample script for WriteFormValues is given in Annex 1 below. This script is compatible with JavaScript DOM implementation in third-generation browsers (e.g. Microsoft^{™} Internet Explorer^{™} 3.00 and above or Netscape^{™} Navigator^{™} 3.00 and above).

To copy the values from the page parameters to the associated fields, the function WriteFormValues is invoked using the OnLoad event in the HTML BODY tag, for example:
OnLoad="WriteFormValues()"

Finally, a hyperlink to the conduit 3 is included in the form page to allow the user to invoke the web service 40 via the conduit 3. The hyperlink may be associated with an icon allowing the user to identify a link to the conduit 3. For example, the hyperlink may be coded as:
<A HREF = "http://conduitserver.com/conduitrequest.aspx
?name=con_profile_name&telno=con_profile_telno&con_pid=1234 >
<IMG SRC=http://conduitserver.com/images/request.gif BORDER="0"></A>

The URL contains a list of parameters used by the conduit 3, where Name and Telno refer to the form text boxes with fieldnames Name and Telno respectively. PID is a partner identifier which identifies the web site 4 to the conduit 3. The parameter names are preferably those recognised by the web service 40, prefixed with 'con_' to represent the encoded version for the conduit 3.

In some cases, additional parameters may need to be sent to the conduit 3 for supply to the web service 40. For example, the web service may require an email address of the user. This information is extracted by the JavaScript from either hidden field information or from a textbox on the form page, and the name-pair field is sent to the conduit 3. The conduit 3 recognises this field because of the 'con_' prefix before the actual parameter name recognised by the web service 40.

### Write Operation

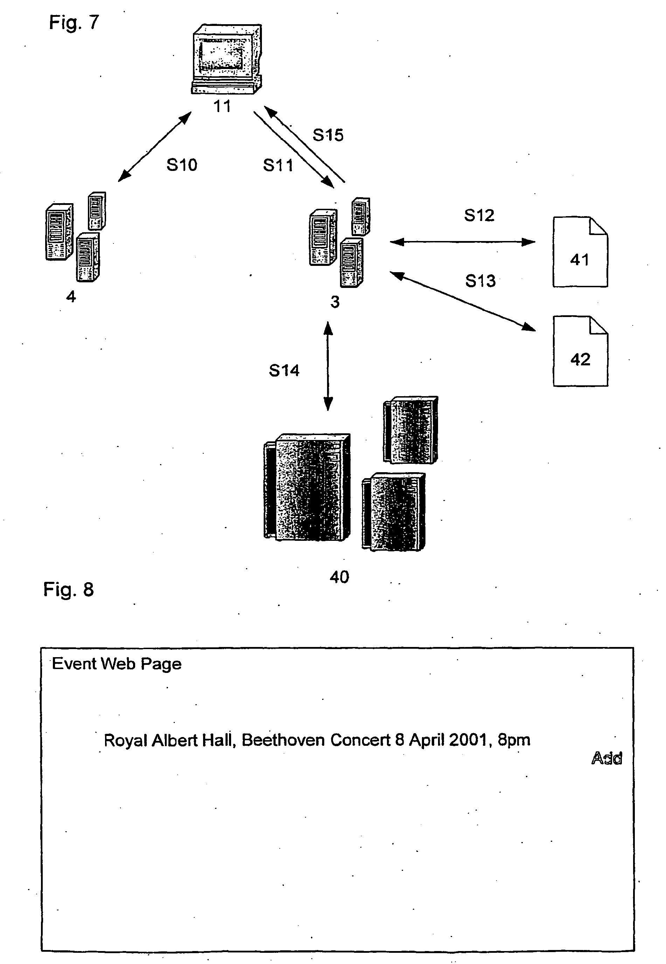

An example of a write operation in a second embodiment of the present invention will now be described with reference to Figures 7 and 8. This embodiment uses the same general architecture as shown in Figure 2. In this example, the user adds the details of an event to a web calendar service.

At step S10, the user of the browser 11 requests a page from a web site 4, which displays details of an event with a hyperlink to add that event to the user's calendar. For example, as shown in Figure 8, details of a concert are displayed with an 'Add' button alongside.

At step S11, the user clicks on the 'Add' button and the browser is redirected to the conduit 3 by the underlying hyperlink. The hyperlink comprises the URL of the conduit 3 together with parameters which include the identity of the web service 40, the identity of the web site 4, and the names and values of the fields to be written to the web service 40. These parameters are passed to the conduit 3.

If the user is not already authenticated, at step S12 the conduit 3 prompts the user to log in, as in the read operation.

At step S 13, the conduit 3 checks the identity of the indicated web service 40 against a list 42 of web services to which the user has granted the conduit 3 permission to access. If the indicated web service is not on this list, the conduit 3 sends a page to the browser 11 prompting the user to add the indicated web service 40 to the user's list 42. If the user agrees to add the indicated web service to the list 42 then the process continues. Otherwise, the process terminates and the conduit 3 sends a page to the browser 11 indicating that the web service 40 cannot be used.

At step S14, the conduit 3 send parameter values derived from the parameter values in the hyperlink to the web service 40, and the web service responds by confirming that the values have been added to the user's calendar. At step S15, the conduit 3 displays a page, such as a pop-up window, confirming that the details of the event have been added to the user's calendar.

### Web Site Implementation

To implement a write operation link, only a correctly formatted hyperlink is required in the displayed page at the web site 4. For example:
<A HREF="http://conduitserver.com/
?con_pid=1234&con_eid=5678&con_day=08&con_month=04&con _year=2001&con_starttime=20.00&con_subject=beethoven@royal_albert_ha ll>
<IMG SRC=http://conduitserver.com/images/add.gif
BORDER="0"></A>

The hyperlink contains the names and values of parameters recognised by the web service, with the names prefixed by 'con_' so that the conduit 3 can identify parameters which it must forward to the web service 40.

Alternatively, an address-based hyperlink may be used, such as:
http://conduitserver.com/pid=1234/eid=5678/08/04/2001/20.00/beeth oven@royal_albert_hall>

### Conduit Implementation for Read/Write Operation

The following description applies to both read and write operations and hence to both the first and second embodiments.

The conduit 3 has access to a web service database identifying the format and protocol requirements of available web services 40, as well as their service types and field definitions. The conduit 3 is therefore able to translate a generic access request from the browser 11 to an access request to a specific web service 40.

The conduit 3 also has access to a user database identifying, for each registered user, the web services 40 to which the user has granted permission to access, together with user logon details such as UserID and password.

In each web service access request, the conduit 3 receives the parameters from the browser 11 and identifies those with the "con_" prefix as requiring processing. The conduit 3 identifies the requested web service type from the service type prefix of the parameters; for example, "profile_" indicates a user profile server type. Those parameters without a service type prefix, such as PID, are for internal processing by the conduit 3 and are not passed to a web service.

The conduit 3 then identifies a specific web service 40 by searching the specified user record of the user database for a permitted web service of the specified web service type. The conduit reads the requirements of the specific web service 40 from the web service database, and formats and sends the parameters relevant to that web service 40 according to those requirements.

The present invention is not limited to the general or specific embodiments described above. It is envisaged that various modifications and variations could be made without falling outside the scope of the present invention.

### Annex 1 - Sample JavaScript Function

```
 function WriteFormValues() {
 var queryString = document.location.href;
 var twoQueryString = queryString.split("?");
 if(twoQueryString.length<=1) return;
 var eachFormElement = twoQueryString[1].split("&");
 var m_Name Value = new Array();
 //Search through hidden fields here
 //On the return trip the hidden fields will be pulled back out and
 //reloaded into form element values
 for(int a = 0; a < details.elements.length; i++) {
 if(details.elements[i].type="hidden") {
   m_NameValue[details.elements[i].name] = details.elements[i].value;
  }
 }
 //Do form handling here
 var details = document.forms[0];
 var selected = false;
 for(i = 0; i < details.elements.length; i++) {
 if(details.elements[i].type=="text" II details.elements[i].type="hidden") {
  for(var j = 0; j < eachFormElement.length; j++) {
   var tempString = eachFormElement[j].split("=");
   if(tempString[0] = details.elements[i].name) {
   details.elements[i].value=tempString[1];
    selected = true;
    break;
    }
   }
   //Do the capturing of querystring information here - if the name from the
   //name-value pair doesn't correspond to a form element then the values will
 be
   //appended to the link querystring
   if(selected=false) {
    m_Namevalue[tempString[0]] = tempString[1];
   }
   selected = false;
   }
  //Add to conduit link
  var addQuery = "&";
  for(key in m_Name) {
  addQuery += (key + "=" + m_NameValue[key] + "&");
  }
  document.all["Link"].href += addQuery.substring(0, addQuery.length - 1);
  return true;
 }
```

### Annex 2 - GLOSSARY

- DOM:: Document Object Model which allows JavaScript to interact with objects on an HTML page to change their behaviour.
- HTTP:: HyperText Transport Protocol. The standard World Wide Web client-server protocol user for the exchange of information (such as HTML documents, and client requests for such documents) between a browser and a web server.
- HTML:: HyperText Markup Language. A standard coding convention and set of codes for attaching presentation and linking attributes to informational content within web pages. During a web page authoring stage, the HTML codes are embedded within the informational content of the web page. When the web page is subsequently downloaded to a browser, the codes are interpreted by the browser and user to parse and display the web page. HTML codes are often used to create links to other web pages, commonly referred to as "hyperlinks".
- JavaScript:: A platform-independent scripting language which can interact with HTML to provide additional browser functionality.
- .NET:: An operating system platform developed by Microsoft, which allows applications to be hosted on remote servers over the Internet.
- Passport:: A standardized authentication system for .NET which allows users to be authenticated to multiple different services using a single set of authentication details.
- SOAP:: Simple Object Access Protocol. A platform-independent protocol for sending information over the Internet. SOAP uses an XML format with HTTP as a transport protocol,
- XML:: Extensible Markup Language. A specification for designing customized tags (HTML codes), enabling the definition, transmission, validation and interpretation of data between applications and between organisations.

## Claims

1. A method of providing access to a remote data service (40) over a network (14), comprising:
a. receiving (S2; S11) from a browser (11) a data access request, in a first format, identifying one or more parameters;
b. converting the data access request into a second format;
c. forwarding (S5; S14) the data access request in the second format to the remote data service so as to perform a data access using the parameters;
d. receiving (S5) from the remote data service (40), in said second format, a data message containing parameter values corresponding to the parameters identified in said data access request;
e. converting the data message from said second format to said first format; and
f. forwarding (S6) the data message in the first format to the browser (11)
**characterised in that**
the remote data service (40) is a web service, the network (14) is the Internet and the data access request is initially forwarded by the browser (11) from a web site (4) remote from the browser (11) and from the data service (40).

2. The method of claim 1, wherein the data access request further includes a write access request and contains parameter values corresponding to the parameters identified in said data access request, and step c causes the parameter values to be written to the data service (40).

3. A method of providing access to a web service (40) over the Internet (14) using a link protocol, comprising sending to a browser (11) a hyperlink to a network conduit (3),
**characterised in that**
the hyperlink is sent by a web site (4) remote from the browser (11) and from the web service (40), wherein the hyperlink identifies one or more parameters and is formatted so as to cause the network conduit (3) to perform a data access at the web service (40) using the parameters when forwarded to the network conduit (3) by the browser (11), such that parameter values corresponding to the parameters are read (S5) from the web service (40) by the network conduit (3) and are forwarded to the browser (11).

4. The method of claim 3, further comprising sending to the browser (11) a hyperlink to a program to cause the program to be loaded and executed by the browser (11) so as to control the handling of the data access by the browser (11).

5. The method of claim 4, further including the step of receiving the parameter values from the browser (11).

6. The method of claim 3, wherein the hyperlink is further formatted to provide a data write access at the web service (40) and includes parameter values corresponding to the parameters, such that the parameter values are written to the web service (40) by the network conduit (3).

7. A method of performing a data access operation at a web service (40) over the Internet (14) from a browser (11) using a link protocol, including:
a. receiving (S1; S10) at the browser (11) from a web site (4) a hyperlink directed to a network conduit (3), the web site (4) being remote from the browser (11) and from the web service (40); and
b. in response to user activation of the hyperlink, connecting (S2) the browser (11) to the network conduit (3) over the Internet (14),
**characterised in that**
the hyperlink identifies one or more parameters and is formatted so as to cause the network conduit (3) to perform a data access at the web service (40) using the parameters, and further **characterised in that** the method further includes:
c. identifying the parameters to the network conduit (3), such that the parameters are forwarded by the network conduit (3) to the web service (40) so as to perform the data access operation; and
d. receiving (S6) at the browser (11) parameter values corresponding to the parameters from the network conduit (3).

8. The method of claim 7, further including forwarding (S7) the parameter values to the web site (4).

9. The method of claim 7 or claim 8, including receiving a hyperlink to a program, the hyperlink causing the program to be loaded and executed by the browser (11) so as to control the handling of the access operation by the browser (11).

10. The method of claim 7, wherein the data access operation further includes a write access operation, and the hyperlink includes parameter values corresponding to the identified parameters, whereby the parameter values are written to the web service (40) by the network conduit (3).

11. A computer readable storage medium storing a set of machine executable instructions, said set of machine executable instructions being executable by a computer to perform the steps of any preceding claim.

12. A web page for providing access to a web service (40) over the Internet (14), the web page comprising a hyperlink to a conduit (3),
**characterised by**
the hyperlink identifying one or more parameters and being formatted so as to cause, in response to user activation of the hyperlink at a browser (11), the network conduit (3) to perform a data access at the web service (40) using the parameters, wherein the hyperlink is further formatted so as to cause the network conduit (3) to forward from the web service (40) to the browser (11) a data message containing parameter values corresponding to the parameters identified in the data access.

13. Apparatus for providing access to a remote data service (40) over a network (14), comprising:
a. means for receiving (S2; S11) from a browser (11) a data access request, in a first format, identifying one or more parameters;
b. means for converting the data access request into a second format and for forwarding (S5; S14) the data access request in the second format to the remote data service so as to perform a data access using the parameters;
c. means for receiving (S5) from the remote data service (40), in said second format, a data message containing parameter values corresponding to the parameters identified in said data access request;
d. means for converting the data message from said second format to said first format; and
e. means for forwarding (S6) the data message in the first format to the browser (11),
**characterised in that**
the remote data service (40) is a web service, the network (14) is the Internet, and the apparatus is arranged to communicate with the browser (11) such that the data access request is initially forwarded by the browser (11) from a web site (4) remote from the browser (11) and from the data service (40).

14. The apparatus of claim 13, wherein the data access request further includes a write access request and contains parameter values corresponding to the parameters identified in said data access request, and the means for converting are arranged to cause the parameter values to be written to the data service (40).

15. Apparatus for providing access to a web service (40) over the Internet (14) using a link protocol, comprising:
means for sending to a browser (11) a hyperlink to a network conduit (3),
**characterised in that**
the hyperlink identifies one or more parameters and is formatted so as to cause the network conduit (3) to perform a data access at the web service (40) using the parameters when forwarded to the network conduit (3) by the browser (11), such that parameter values corresponding to the parameters are read (S5) from the web service (40) by the network conduit (3) and are forwarded to the browser (11), wherein the apparatus is suitable for sending the hyperlink when remote from the browser (11) and from the web service (40).

16. The apparatus of claim 15, further comprising means adapted for sending to the browser (11) a hyperlink to a program to cause the program to be loaded and executed by the browser (11) so as to control the handling of the data access by the browser (11).

17. The apparatus of claim 16, further comprising means for receiving the parameter values from the browser (11).

18. The apparatus of claim 15, wherein the hyperlink is further formatted to provide a data write access at the web service (40) and includes parameter values corresponding to the parameters, such that the parameter values are written to the web service (40) by the network conduit (3).

## Patentansprüche

1. Verfahren zur Bereitstellung eines Zugangs zu einem Ferndatendienst (40) über ein Netzwerk (14), umfassend:
a. das Empfangen (S2; S11), von einem Browser (11), einer Datenzugriffsanforderung in einem ersten Format, die eine oder mehrere Parameter angibt;
b. das Umwandeln der Datenzugriffsanforderung in ein zweites Format;
c. das Weiterleiten (S5; S14) der Datenzugriffsanforderung im zweiten Format zum Ferndatendienst, um einen Datenzugriff mit den Parametern durchzuführen;
d. das Empfangen (S5), vom Ferndatendienst (40), in diesem zweiten Format, einer Datennachricht, die Parameterwerte enthält, die den in dieser Datenzugriffsanforderung genannten Parametern entsprechen;
e. das Umwandeln der Datennachricht von diesem zweiten Format in das erste Format; und
f. das Weiterleiten (S6) der Datennachricht im ersten Format zum Browser (11)
**dadurch gekennzeichnet, dass**
der Ferndatendienst (40) ein webgestützter Dienst ist, das Netzwerk (14) das Internet ist und die Datenzugriffsanforderung anfangs vom Browser (11) von einer Website (4) aus weitergeleitet wird, die fern vom Browser (11) und vom Datendienst (40) ist.

2. Verfahren nach Anspruch 1, wobei die Datenzugriffsanforderung außerdem eine Schreibzugriffsanforderung umfasst und Parameterwerte enthält, die den in dieser Datenzugriffsanforderung genannten Parametern entsprechen, und der Schritt c bewirkt, dass die Parameterwerte in den Datendienst (40) geschrieben werden.

3. Verfahren zur Bereitstellung eines Zugriffs auf einen webgestützten Dienst (40) über das Internet (14) unter Verwendung eines Verbindungsprotokolls, umfassend das Senden, an einen Browser (11), eines Hyperlinks zu einer Netzwerkverbindung (3),
**dadurch gekennzeichnet, dass**
der Hyperlink von einer Website (4) gesendet wird, die fern vom Browser (11) und vom Webdienst (40) ist, wobei der Hyperlink einen oder mehrere Parameter angibt und so formatiert ist, dass er die Netzwerkverbindung (3) veranlasst, mit den Parametern einen Datenzugriff auf den webgestützten Dienst (40) durchzuführen, wenn er vom Browser (11) zur Netzwerkverbindung (3) weitergeleitet wird, sodass durch die Netzwerkverbindung (3) den Parametern entsprechende Parameterwerte aus dem webgestützten Dienst (40) gelesen (S5) und zum Browser (11) weitergeleitet werden.

4. Verfahren nach Anspruch 3, außerdem umfassend das Senden, an den Browser (11), eines Hyperlinks zu einem Programm, um zu bewirken, dass das Programm vom Browser (11) geladen und ausgeführt wird, wodurch die Abwicklung des Datenzugriffs durch den Browser (11) gesteuert wird.

5. Verfahren nach Anspruch 4, außerdem umfassend den Schritt des Empfangens der Parameterwerte vom Browser (11).

6. Verfahren nach Anspruch 3, wobei der Hyperlink außerdem formatiert ist, um einen Datenschreibzugriff im webgestützten Dienst (40) zu gewährleisten, und den Parametern entsprechende Parameterwerte einschließt, sodass die Parameterwerte durch die Netzwerkverbindung (3) in den webgestützten Dienst (40) geschrieben werden.

7. Verfahren zur Durchführung eines Datenzugriffs auf einen webgestützten Dienst (40) über das Internet (14) von einem Browser (11) aus mithilfe eines Verbindungsprotokolls, umfassend:
a. das Empfangen (S1; S10), beim Browser (11), von einer Website (4), eines Hyperlinks zu einer Netzwerkverbindung (3), wobei die Website (4) fern vom Browser (11) und vom webgestützten Dienst (40) ist; und
b. in Antwort auf eine Aktivierung des Hyperlinks durch den Benutzer, das Verbinden (S2) des Browsers (11) mit der Netzwerkverbindung (3) über das Internet (14),
**dadurch gekennzeichnet, dass**
der Hyperlink einen oder mehrere Parameter angibt und formatiert ist, um die Netzwerkverbindung (3) zu veranlassen, mit den Parametern einen Datenzugriff auf den webgestützten Dienst (40) durchzuführen, und außerdem **dadurch gekennzeichnet, dass** das Verfahren außerdem umfasst:
c. das Angeben der Parameter an die Netzwerkverbindung (3), sodass die Parameter durch die Netzwerkverbindung (3) zum webgestützten Dienst (40) weitergeleitet werden, um den Datenzugriff durchzuführen; und
d. das Empfangen (S6), im Browser (11), der den Parametern entsprechenden Parameterwerte von der Netzwerkverbindung (3).

8. Verfahren nach Anspruch 7, außerdem umfassend das Weiterleiten (S7) der Parameterwerte zur Website (4).

9. Verfahren nach Anspruch 7 oder 8, umfassend das Empfangen eines Hyperlinks zu einem Programm, wobei der Hyperlink bewirkt, dass das Programm vom Browser (11) geladen und ausgeführt wird, um die Abwicklung des Zugriffs durch den Browser (11) zu steuern.

10. Verfahren nach Anspruch 7, wobei der Datenzugriff außerdem einen Schreibzugriff umfasst und der Hyperlink den genannten Parametern entsprechende Parameterwerte umfasst, wodurch die Parameterwerte durch die Netzwerkverbindung (3) in den webgestützten Dienst (40) geschrieben werden.

11. Computerlesbares Speichermedium, in welchem ein Satz maschinenausführbarer Anweisungen gespeichert ist, wobei dieser Satz maschinenausführbarer Anweisungen von einem Computer ausführbar ist, um die Schritte in jedem vorherigen Anspruch durchzuführen.

12. Webseite, um über das Internet (14) Zugang zu einem webgestützten Dienst (40) zu gewähren, wobei die Webseite einen Hyperlink zu einer Verbindung (3) aufweist,
**dadurch gekennzeichnet,**
**dass** der Hyperlink einen oder mehrere Parameter angibt und so formatiert ist, dass er in Antwort auf eine Benutzerbetätigung des Hyperlinks in einem Browser (11) die Netzwerkverbindung (3) veranlasst, mit den Parametern einen Datenzugriff auf den webgestützten Dienst (40) durchführen, wobei der Hyperlink außerdem so formatiert ist, dass er die Netzwerkverbindung (3) veranlasst, vom webgestützten Dienst (40) eine Datennachricht zum Browser (11) weiterzuleiten, die den beim Datenzugriff genannten Parametern entsprechende Parameterwerte enthält.

13. Vorrichtung zur Bereitstellung eines Zugriffs auf einen webgestützten Datendienst (40) über ein Netzwerk (14), umfassend:
a. Mittel zum Empfangen (S2; S11), von einem Browser (11), einer Datenzugriffsanforderung in einem ersten Format, die eine oder mehrere Parameter angibt;
b. Mittel zum Umwandeln der Datenzugriffsanforderung in ein zweites Format und zum Weiterleiten (S5; S14) der Datenzugriffsanforderung im zweiten Format zum Ferndatendienst, um mit den Parametern einen Datenzugriff durchzuführen;
c. Mittel zum Empfangen (S5), vom Ferndatendienst (40), in diesem zweiten Format, einer Datennachricht, die Parameterwerte enthält, die den in dieser Datenzugriffsanforderung angegebenen Parametern entsprechen;
d. Mittel zum Umwandeln der Datennachricht von diesem zweiten Format in das erste Format; und
e. Mittel zum Weiterleiten (S6) der Datennachricht im ersten Format zum Browser (11),
**dadurch gekennzeichnet, dass**
der Ferndatendienst (40) ein webgestützter Dienst ist, das Netzwerk (14) das Internet ist und die Datenzugriffsanforderung anfangs vom Browser (11) von einer Website (4) aus weiterleitet wird, die fern vom Browser (11) und vom Datendienst (40) ist.

14. Vorrichtung nach Anspruch 13, wobei die Datenzugriffsanforderung außerdem eine Schreibzugriffsanforderung einschließt und Parameterwerte enthält, die den in der Datenzugriffsanforderung genannten Parametern entsprechen, und das Mittel zum Umwandeln angeordnet ist, um zu bewirken, dass die Parameterwerte in den Datendienst (40) geschrieben werden.

15. Vorrichtung zur Bereitstellung eines Zugriffs auf einen webgestützten Dienst (40) über das Internet (14) unter Verwendung eines Verbindungsprotokolls, umfassend:
Mittel zum Senden, an einen Browser (11), eines Hyperlinks zu einer Netzwerkverbindung (3),
**dadurch gekennzeichnet, dass**
der Hyperlink einen oder mehrere Parameter angibt und so formatiert ist, dass er die Netzwerkverbindung (3) veranlasst, anhand der Parameter einen Datenzugriff auf den webgestützten Dienst (40) durchzuführen, wenn er vom Browser (11) zur Netzwerkverbindung (3) weitergeleitet wird, sodass durch die Netzwerkverbindung (3) den Parametern entsprechende Parameterwerte aus dem webgestützten Dienst (40) gelesen werden (S5) und zum Browser (11) weitergeleitet werden, wobei die Vorrichtung geeignet ist, den Hyperlink zu senden, wenn er fern vom Browser (11) und webbasierten Dienst (40) ist.

16. Vorrichtung nach Anspruch 15, außerdem umfassend Mittel, die geeignet sind, an den Browser (11) einen Hyperlink zu einem Programm zu senden, um zu bewirken, dass das Programm vom Browser (11) geladen und ausgeführt wird, sodass die Abwicklung des Datenzugriffs vom Browser (11) gesteuert wird.

17. Vorrichtung nach Anspruch 16, außerdem umfassend Mittel zum Empfangen der Parameterwerte vom Browser (11).

18. Vorrichtung nach Anspruch 15, wobei der Hyperlink außerdem formatiert ist, um einen Datenschreibzugriff im webgestützten Dienst (40) zu gewährleisten und den Parametern entsprechende Parameterwerte umfasst, sodass die Parameterwerte durch die Netzwerkverbindung (3) in den webgestützten Dienst (40) geschrieben werden.

## Revendications

1. Procédé destiné à permettre l'accès à un service de données à distance (40) sur un réseau (14), comportant les étapes consistant à :
a. recevoir (S2 ; S11) d'un navigateur (11) une demande d'accès à des données, dans un premier format, en identifiant un ou plusieurs paramètres ;
b. convertir la demande d'accès à des données dans un second format ;
c. acheminer (S5 ; S14) la demande d'accès à des données dans le second format auprès du service de données à distance afin de procéder à un accès à des données en utilisant les paramètres ;
d. recevoir (S5) du service de données à distance (40), dans ledit second format, un message de données contenant des valeurs de paramètres correspondant aux paramètres identifiés dans ladite demande d'accès à des données ;
e. convertir le message de données dudit second format dans ledit premier format ; et
f. acheminer (S6) le message de données dans le premier format auprès du navigateur (11) ;
**caractérisé en ce que**
le service de données à distance (40) est un service Web, le réseau (14) est le réseau Internet et la demande d'accès à des données est initialement acheminée par le navigateur (11) depuis un site Web (4), distant du navigateur (11), et depuis le service de données (40).

2. Procédé selon la revendication 1, dans lequel la demande d'accès à des données comporte en outre une demande d'accès en écriture et contient des valeurs de paramètres correspondant aux paramètres identifiés dans ladite demande d'accès à des données, et l'étape c provoque l'écriture des valeurs de paramètres auprès du service de données (40).

3. Procédé permettant un accès à un service Web (40) sur le réseau Internet (14) en utilisant un protocole de liaison, comportant l'étape consistant à envoyer, à un navigateur (11), un hyperlien vers un canal de réseau (3),
**caractérisé en ce que**
l'hyperlien est envoyé par un site Web (4) distant du navigateur (11) et du service Web (40), l'hyperlien identifiant un ou plusieurs paramètres et étant formaté afin de provoquer la mise en oeuvre d'un accès de données auprès du service Web (40) par le canal de réseau (3) en utilisant les paramètres lorsqu'ils sont acheminés vers le canal de réseau (3) par le navigateur (11), de sorte que les valeurs de paramètres correspondant aux paramètres sont lues (S5) auprès du service Web (40) par le canal de réseau (3) et sont acheminées vers le navigateur (11).

4. Procédé selon la revendication 3, comportant en outre l'étape consistant à envoyer au navigateur (11) un hyperlien vers un programme pour provoquer le chargement et l'exécution du programme par le navigateur (11) afin de commander la gestion de l'accès aux données par le navigateur (11).

5. Procédé selon la revendication 4, comportant en outre l'étape consistant à recevoir les valeurs de paramètres du navigateur (11).

6. Procédé selon la revendication 3, dans lequel l'hyperlien est en outre formaté pour effectuer un accès d'écriture de données auprès du service Web (40) et comporte des valeurs de paramètres correspondant aux paramètres, de sorte que les valeurs de paramètres sont écrites auprès du service Web (40) par le canal de réseau (3).

7. Procédé permettant d'effectuer une opération d'accès à des données auprès d'un service Web (40) sur le réseau Internet (14) à partir d'un navigateur (11) en utilisant un protocole de liaison, comportant les étapes consistant à :
a. recevoir (S1 ; S10) sur le navigateur (11), en provenance d'un site Web (4), un hyperlien orienté vers un canal de réseau (3), le site Web (4) étant distant du navigateur (11) et du service Web (40) ; et
b. en réponse à l'activation de l'hyperlien par un utilisateur, connecter (S2) le navigateur (11) au canal de réseau (3) sur le réseau Internet (14),
**caractérisé en ce que**
l'hyperlien identifie un ou plusieurs paramètres et est formaté afin de provoquer la mise en oeuvre d'un accès de données par le canal de réseau (3) auprès du service Web (40) en utilisant les paramètres, et **caractérisé en ce que** le procédé comporte en outre les étapes consistant à :
c. identifier les paramètres concernant le canal de réseau (3), de sorte que les paramètres sont acheminés par le canal de réseau (3) vers le service Web (40) afin de procéder à l'opération d'accès aux données ; et
d. recevoir (S6) sur le navigateur (11) des valeurs correspondant aux paramètres provenant du canal de réseau (3).

8. Procédé selon la revendication 7, comportant en outre l'étape consistant à acheminer (S7) les valeurs de paramètres vers le site Web (4).

9. Procédé selon la revendication 7 ou la revendication 8, comportant l'étape consistant à recevoir un hyperlien vers un programme, l'hyperlien provoquant le chargement et l'exécution du programme par le navigateur (11) afin de commander le traitement de l'opération d'accès par le navigateur (11).

10. Procédé selon la revendication 7, dans lequel l'opération d'accès aux données comporte en outre une opération d'accès en écriture et l'hyperlien comporte des valeurs de paramètres correspondant aux paramètres identifiés, ce qui provoque l'écriture des valeurs de paramètres auprès du service Web (40) par le canal de réseau (3).

11. Support de stockage lisible par ordinateur contenant un ensemble d'instructions exécutables par une machine, ledit ensemble d'instructions exécutables par une machine étant exécutable par un ordinateur pour procéder aux étapes selon l'une quelconque des revendications précédentes.

12. Page Web destinée à permettre l'accès à un service Web (40) sur le réseau Internet (14), la page Web comportant un hyperlien vers un canal (3),
**caractérisé par le fait que**
l'hyperlien identifie un ou plusieurs paramètres et est formaté afin de provoquer, en réponse à l'activation de l'hyperlien par un utilisateur dans un navigateur (11), la mise en oeuvre par le canal de réseau (3) d'un accès aux données par le service Web (40) en utilisant les paramètres, l'hyperlien étant en outre formaté afin de provoquer l'acheminement par le canal de réseau (3), entre le service Web (40) et le navigateur (11), d'un message de données contenant les valeurs de paramètres correspondant aux paramètres identifiés dans l'accès aux données.

13. Appareil destiné à permettre un accès à un service de données à distance (40) sur un réseau (14), comportant :
a. un moyen destiné à recevoir (S2 ; S11), depuis un navigateur (11), une demande d'accès à des données, selon un premier format, en identifiant un ou plusieurs paramètres ;
b. un moyen destiné à convertir la demande d'accès à des données en un second format et à acheminer (S5 ; S14) la demande d'accès à des données dans le second format vers le service de données à distance afin de procéder à un accès à des données en utilisant les paramètres ;
c. un moyen destiné à recevoir (S5), en provenance du service de données à distance (40), dans ledit second format, un message de données contenant des valeurs de paramètres correspondant aux paramètres identifiés dans ladite demande d'accès à des données ;
d. un moyen destiné à convertir le message de données dudit second format dans ledit premier format ; et
e. un moyen destiné à acheminer (S6) le message de données dans le premier format vers le navigateur (11),
**caractérisé en ce que**
le service de données à distance (40) est un service Web, le réseau (14) est le réseau Internet et l'appareil est conçu pour communiquer avec le navigateur (11) de sorte que la demande d'accès à des données est initialement acheminée par le navigateur (11) à partir d'un site Web (4) distant du navigateur (11) et à partir du service de données (40).

14. Appareil selon la revendication 13, dans lequel la demande d'accès à des données comporte en outre une demande d'accès en écriture qui contient des valeurs de paramètres correspondant aux paramètres identifiés dans ladite demande d'accès à des données, et le moyen de conversion est conçu pour provoquer l'écriture des valeurs de paramètres auprès des services de données (40).

15. Appareil destiné à permettre l'accès à un service Web (40) sur le réseau Internet (14) en utilisant un protocole de liaison, comportant :
un moyen destiné à émettre, vers un navigateur (11), un hyperlien vers un canal de réseau (3),
**caractérisé en ce que**
l'hyperlien identifie un ou plusieurs paramètres et est formaté afin de provoquer la mise en oeuvre par le canal de réseau (3) d'un accès à des données auprès du service Web (40) en utilisant les paramètres, lors d'un acheminement vers le canal de réseau (3) par le navigateur (11), de sorte que les valeurs de paramètres correspondant aux paramètres sont lues (S5) auprès du service Web (40) par le canal de réseau (3) et sont acheminées vers le navigateur (11), l'appareil étant conçu pour émettre l'hyperlien lorsqu'il se trouve à distance du navigateur (11) et du service Web (40).

16. Appareil selon la revendication 15, comportant en outre un moyen conçu pour envoyer au navigateur (11) un hyperlien vers un programme, pour provoquer le chargement et l'exécution du programme par le navigateur (11) afin de commander le traitement de l'accès à des données par le navigateur (11).

17. Appareil selon la revendication 16, comportant en outre un moyen destiné à recevoir les valeurs de paramètres provenant du navigateur (11).

18. Appareil selon la revendication 15, dans lequel l'hyperlien est en outre formaté pour effectuer un accès en écriture à des données auprès du service Web (40), et comporte des valeurs de paramètres correspondant aux paramètres, de sorte que les valeurs de paramètres sont écrites auprès du service Web (40) par le canal de réseau (3).
